(19) **Europäisches Patentamt**
**European Patent Office**
**Office européen des brevets**

(11) **EP 2 675 871 B1**

(12) **EUROPEAN PATENT SPECIFICATION**

(45) Date of publication and mention
of the grant of the patent:
**21.11.2018 Bulletin 2018/47**

(51) Int Cl.:
*C10G 1/10* (2006.01)          *C10G 15/08* (2006.01)
*C10B 53/07* (2006.01)          *C10B 19/00* (2006.01)

(21) Application number: **12718345.7**

(22) Date of filing: **20.02.2012**

(86) International application number:
**PCT/IB2012/050748**

(87) International publication number:
**WO 2012/110991 (23.08.2012 Gazette 2012/34)**

(54) **PRODUCTION OF HYDROCARBONS FROM PYROLYSIS OF TYRES**

HERSTELLUNG VON KOHLENWASSERSTOFFEN AUS PYROLYSE VON REIFEN

PRODUCTION D'HYDROCARBURES PAR PYROLYSE DE PNEUS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.02.2011 IT FI20110030**

(43) Date of publication of application:
**25.12.2013 Bulletin 2013/52**

(73) Proprietor: **Tyrebirth S.r.l.**
**50145 Firenze (IT)**

(72) Inventors:
• **FREDIANI, Piero**
**I-50121 Firenze (IT)**
• **ROSI, Luca**
**I-50136 Firenze (IT)**

• **FREDIANI, Marco**
**I-51100 Pistoia (IT)**
• **UNDRI, Andrea**
**I-50136 Firenze (IT)**
• **OCCHIALINI, Silvio**
**I-50068 Rufina (IT)**
• **MEINI, Stefano**
**I-50065 Pontassieve (IT)**

(74) Representative: **Valenza, Silvia et al**
**Notarbartolo & Gervasi S.p.A.**
**Corso di Porta Vittoria 9**
**20122 Milano (IT)**

(56) References cited:
**US-A- 5 084 140          US-A1- 2007 131 591
US-B1- 6 184 427**

EP 2 675 871 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

The present invention relates to the field of recycling methods of plastic materials, in particular to the recycle of tyres.

STATE OF THE ART

In Italy, in 2008, $4.1 \times 10^5$ tonnes of tyres have been changed to motorcars and motor vehicles to be recycled.

The characteristics and quantities of end-of-life tyres produced annually create a serious problem regarding their disposal.

In Italy, with the introduction of regulations on dumping grounds, Legislative Decree No. 36/2003, by upholding European Directive No. 31/1999, forbids disposal of tyres in dumping grounds after July 2003. It excludes bicycle tyres and tyres with an outside diameter greater than 1,400 mm. From July 2006, it also banned dumping of shredded end-of-life tyres, while it upheld valid the above-mentioned exceptions. The name *end-of-life tyres* has been introduced by Italian Law and shortened by the latter to PFU (*pneumatici fuori uso*).

Handling of these large quantities of waste is an environmental issue of enormous proportions that has required, and requires, a considerable technological and scientific effort for the development of effective systems for the recycling and disposal of this waste.

In 2008, 12% of the PFU was restored and an analogous percentage was intended in the recovery of the material constituting the tyre.

Where reuse and restoring is not feasible, the PFU, whole or cut, in fragmented form or pressed, can be used in engineering works for many applications, such as: roads (asphalts, where the granules improve the mechanical strength, reduces noise and eliminates the phenomenon of aquaplaning); underground and tramways (for the production of anti-vibrating items) street furniture (kerbs for flower-beds, lane bollards, bike paths, parking, playground areas), sports (artificial turf soccer fields, sports flooring for athletic tracks).

In Italy, 19% of the PFU is disposed of with heat treatment processes primarily for the recovery of its energy content. The following are among the technological processes of disposal which employ heat treatments:

- Incineration (even in municipal solid waste incinerators).
- As supply in cement kilns or furnaces for the production of steam.
- Pyrolysis.

In recent years, attention was drawn towards the "pyrolysis" processes of the PFU, and more generally for end-of-cycle polymeric materials, has grown tangibly. The scientific literature on this matter is now extensive, and is written by very important authors in the field of pure and applied chemistry. The pyrolysis process consists in heating of the charge, under strong defect or absence of oxygen, at temperatures of 250 to 1,000 °C. The materials making up the PFU undergo a thermal degradation, giving rise to a solid residue (of carbon nature), a liquid product (pyrolysis oil), and a mixture of gaseous products, in varying proportions depending on the operating conditions. The pyrolysis products can be used in turn as power for plants that use combustion processes, but much more attractive is the possibility to use them as secondary raw materials for other processes (pyrolysis oils, for example, may be introduced as power in an oil refinery). Notwithstanding that currently it concerns marginal applications, the pyrolysis processes are promising solutions both in view of the disposal of the PFU, and for the recovery of materials that constitute them US 2007/0131591 discloses process for pyrolysing tyres.

The present patent application relates to researching of new and more efficient methods for recycling and reuse of plastic materials and end-of-use tyres, which, as first objective, has the production of hydrocarbons.

The majority of research was carried out on laboratory scale or pilot plant, since availability of commercial processes of the PFU pyrolysis, in particular with MW, is still very limited.

The process of the PFU pyrolysis is carried out generally in a range of temperatures comprised between 250 °C and 1,000 °C, and is highly endothermic, with typical energy absorption of 4.0 to 5.7 MJ/kg of rubber (Piskorz, *et al.* 1999). The tyre compound, as already mentioned, is decomposed and converted to products with lower molecular weight (generally a gaseous mixture and a liquid) and a solid residue, consisting mainly of carbon, inorganic ash and non volatizable structural materials (steel).

The gaseous mixture, mainly composed of $H_2$, $H_2S$, CO, $CO_2$, $CH_4$, $C_2H_4$, $C_2H_6$, $C_3H_6$, $C_3H_8$, and butanes, is characterised by a good heat power (68 to 84 MJ/m$^3$) (De Marco Rodriguez, *et al.* 2001) and can be used as fuel in the pyrolysis process thereof, or as an energy source in other processes (Kyari, Cunliffe and Williams 2005).

The liquid product is deemed the most interesting: it is a complex mixture of organic compounds that can be used directly as fuel, as supply in an oil refinery, or as a resource from which to isolate the prevalent compounds (single ring aromatic hydrocarbons and limonene).

The solid residue consists substantially of carbon (black carbon) and from mineral chargers, and may be used as reinforcing article in the tyre industry (in substitution of virgin black carbon), such as activated charcoal (adsorbent) or as smokeless fuel.

Notwithstanding the variability in the chemical composition of a tyre compound, depending on the brand and model, the relative amount of each product (gas, liquid, solid) at the end of the pyrolysis process is not decisively affected by the quality of the charge, but depends on factors of process, such as temperature, pressure, heating rate, particle size, etc.. The reaction temperature in a PFU pyrolysis process is the most influential factor. It is evident that the heating technologies of the charge, in addition to determining the plant design, play a central role with respect to the quantity and quality of the obtained products. From the analysis of the scientific patent and non-patent literature on the PFU pyrolysis process, it is shown that the heating technology of the charge of greatest interest and widest application, are essentially three:

- Indirect heating
- Direct heating
- Microwave heating

The variability of the obtainable products, in terms of yield, by the PFU induction heating has been studied extensively by many authors. The liquid fraction is the product of the PFU pyrolysis deemed more significant in the industry, so that, to a great extent, the research was dedicated to the development of processes wherein the yield in the condensable phase is maximum. Many authors agree that the maximum oil yield is to be found in the range 40 to 58% by weight, when the process is carried out in the range 450 to 550 °C. By decreasing the time of stay of the charge in the reactor, the yield in the liquid phase increases, since with a time of stay in the elevated reactor occur cracking processes that increase yield in the gaseous and solid products. The amount of oil decreases with the increase of the temperature process, and its yield is always higher in an inert atmosphere (nitrogen), while it lowers in processes carried out in an atmosphere containing oxygen (it is presumed that the oxygen causes the partial oxidation of the oil with volatile compounds ($CO_2$ - CO). Generally, among the most important parameters to be considered in optimising the yield of liquid products, there is the rate of heating of the charge (which, in some plants, but not in conventional pyrolysis, can reach even 1,000 °C/min) and the possible rapid cooling of the formed vapours (quenching). A rapid heating followed by an equally rapid cooling could cause the condensable products to be cooled before their cracking, into gaseous products. The results reported in the literature, relative to the percentage composition of the pyrolysis products as a function of temperature, are not mutually congruent. The liquid fractions appear as complex mixtures of organic compounds comprised between $C_6$ and $C_{24}$, the composition of which is generally characterised through GC-MS analysis and MF Laresgoiti, *et al.*, 2004 can be cited by way of example, who have characterised through GC the content of the liquid fractions obtained by pyrolysis experiments carried out in an autoclave with a heating rate of 15 °C/min, upon variation of the final temperature (300 to 700 °C). The compositional variations are not too wide as a function of the temperature at which the pyrolysis experiment was carried out. The prevalent substances are toluene, xylene, limonene, benzene, etc., and hydrocarbons with a moderate commercial value. The mixtures also contain styrene, ethyl benzene, indene, and polycyclic aromatic hydrocarbons (PAH). However, as the authors point out, the percentage of each substance is absolutely very low and few substances are present with percentages greater than 1%: it is therefore evident that the isolation of the single hydrocarbons, even if of a high value, is not an economically viable option.

The distillation of the PFU pyrolysis oils leads into obtaining at least two fractions with characteristics that may be referred to petroleum products commonly available on the market: the most volatile component (up to 30% by weight) is characterised by boiling points comprised within the range of 70 to 210 °C, a feature of the commercial gas lines (De Marco Rodriguez, *et al.* 2001). About 60% of pyrolysis oil is instead characterised by boiling points comprised within the range of 150 to 370 °C, a range characteristic of diesel oil or heavy naphtas. The heat power (De Marco Rodriguez, *et al.* 2001) of the liquid fraction is 43.11 to 44.78 MJ/Kg, therefore even better than that of the commercial fuel oil.

In recent years, the microwave (MW) heating technology has spread very rapidly both in the laboratory structures, and in industry. The MW reactors constitute a sound alternative to traditional heating methods, for which they offer some undeniable advantages:

- Uniform heating of the material.
- Efficient heating and with high-energy yield.
- Rapid heating.
- Selectivity (only some materials absorb microwaves).

However, the main disadvantages are the following:

- Inevitable consumption of electricity
- Difficulty in monitoring temperature (thermocouples or thermometers cannot be used)
- Selectivity (only some materials absorb microwaves).

The presence of a material able of absorbing the microwaves is essential in a charge undergoing a pyrolysis treatment with microwave heating.

The PFU, due to their content of carbon black (at least 25% by weight of the finished product mass), are therefore ideal candidates for pyrolysis processes which make use of microwave heating. Carbon black is a material that, in the tyres undergoing treatment, absorbs microwaves and transmits heat to the pyrolisable component, constituting the compound.

Selection of developing a PFU pyrolysis process using microwave heating is substantially driven by two further advantages with respect to those previously reported:

- The entire tyres can be sent to treatment without great problems of administration of heat (rubber being a poor conductor, an indirect process of heating would not be very efficient in the transfer of heat to the pieces of large sizes).
- Efficiency in heating and best energy efficiency translates into a lower duration of treatment, with consequent increase in the productivity of the plant and reduction (at least with respect to the transfer of heat) of total costs.

Notwithstanding some companies have already developed technologies of microwave pyrolysis, at least on a laboratory scale or pilot plant, it is necessary to clarify that the influence of non-thermal phenomena on the rate and efficiency of the reactions or processes that use microwave heating, comes today as a controversial issue: in fact, the current state of knowledge is not clear on whether any changes in the properties of the obtained products and in the reaction time depend only on the rate and uniformity of heating guaranteed by the MW technologies. Moreover, to the best knowledge of the Applicant, currently in the state of the art, no studies are known that allow understanding which are the process conditions or the experimental set-ups that could allow a modular yield and/or quality of the obtained products by the PFU MW pyrolysis.

In this context, search for always new and more efficient methods of recycling and reuse of end-of-use tyres, is part of the present patent application which, as first objective, is the proposed production of hydrocarbons. The purpose of the present invention is to provide a microwave pyrolysis process for the conversion of tyres into solid, liquid and gaseous products that may find new use in various industrial sectors: from the production of electrical energy for combustion, to the synthesis of plastic materials by polymerization. In particular, to obtain high added value liquid products (characterised qualitatively) for their use, possibly even direct, such as petroleum fractions, or for the extraction of their major components (e.g. limonene and BTX):

DEFINITIONS AND ABREVIATIONS

$V_{M\%}$: Mean percentage pyrolysis rate:

$$V_{M\%} = 100 \frac{(M - M_r) * M^{-1}}{t}$$

wherein M is the total mass undergoing pyrolysis process; Mr is the residual mass in the pyrolysis reactor; t is the duration of the pyrolysis experiment.

$V_{M\,risc}$: Mean heating rate of the mass undergoing pyrolysis.

$$V_{M\,risc} = \frac{T_f - T_i}{t}$$

wherein $T_f$ and $T_i$ are the final and initial temperatures of the pyrolysis process and t is the duration of the experiment.

SUMMARY OF THE INVENTION

The invention is defined in claim 1.

From a macroscopic point of view, the oils obtained by the process of the invention appear straw yellow in colour and are transparent, while those obtained under conditions other than the process of the invention appear brown in colour and are turbid but above all their hydrocarbon content, with boiling points less than or equal to 265 °C, are not greater than 30-40% by weight of the collected liquid fraction.

The oils obtained by the process of the invention can be used for the recovery, through further refining, of raw materials such as limonene, benzene, toluene, xylene, or other hydrocarbons prevailing therein. Actually, the oils obtained by the process of the invention could be used directly as fuel for motor vehicles, or be mixed with commercial fuels.

BRIEF DESCRIPTION OF THE FIGURES

Figure 1 - Experimental apparatus with fractionation (Set-up A) used for the pyrolysis of tyre fragments.
Figure 2 - Experimental apparatus (Set-up B) used for the pyrolysis of tyre fragments.

DETAILED DESCRIPTION OF THE INVENTION

The pyrolysis oils obtainable by the process according to the present invention also have PCS and PCI between 40 and 47 MJ/kg; viscosity between 0.50 and 0.80 cps; density less than or equal to $0.900 gr/cm^3$.

Preferably, the density of the pyrolysis oils obtained by the process is less than $0.850 gr/cm^3$ and the viscosity comprised between 0.50 and 3.40 cps.

It was surprisingly observed that by operating according to set up (A) (i.e., by fractionating the vapours in outlet from the oven before condensing them) it is possible to obtain pyrolysis oils having a sulphur content of <1% by weight and a fraction of distillable hydrocarbons comprised between 20 and 220 °C greater than 60% by weight, even when the delivery of the MW is adjusted to such a power level as to obtain a $V_{M\%}$ greater than 0.4/min and/or a mean heating rate ($V_{M\,risc}$) greater than 5 °C/min.

Preferably, one or more generators operating at a frequency of 2.45 GHz are used for the delivery of the MW.

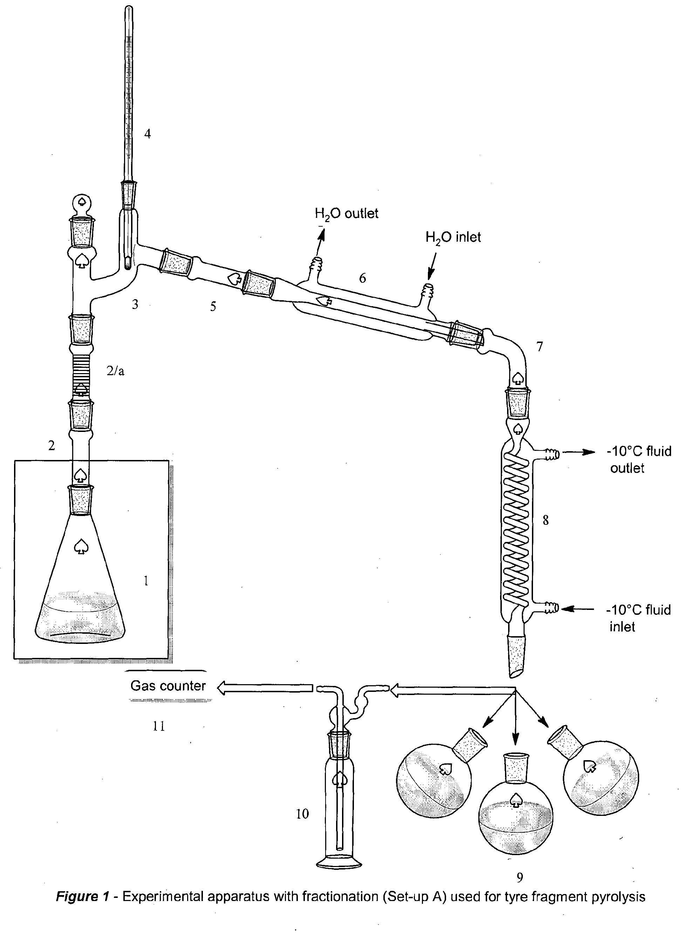

There is disclosed a process of type (A) thanks to which it is possible to deliver MW at maximum power (e.g. $V_{M\%}$ greater than 1.0 $min^{-1}$ or $V_{M\,risc}$ greater than 10 °C/min) or better still, to a power level such as to obtain a $V_{M\%}$ comprised between 0.4 and 1.1 $min^{-1}$ and/or a mean heating rate ($V_{M\,risc}$) comprised between 5 and 15 °C/min. By operating under these conditions and in the presence of a fractionation system (Set-up A, Figure 1) it was possible obtaining pyrolysis oils whose distillable fraction comprised between 20 and 200 °C is actually greater than 70% by weight and which contain limonene in a quantity which may exceed 7% (percentage area by GC-MS analysis). The high quantity of limonene and single ring aromatic compounds, such as toluene, benzene, styrene, etc., makes pyrolysis oils a possible resource from which to isolate the prevalent compounds.

In addition and preferably, the quantity of distillable hydrocarbons in the range of 20 to 200 °C is greater than 70% by weight of the pyrolysis oil.

Examples of systems of fractionation are:

- Dephlagmator with air-cooling
- Dephlagmator with column filled with Fenske, Rashig, Pall, Lessing, and Cross-Partition rings
- Dephlagmator with column filled with Berl, and Intalox saddles
- Dephlagmator with column filled with glass beads of various diameters (0.5 to 4 mm)
- Dephlagmator with plate column and their similar fractionation industrially viable systems.

Concerning the yield of pyrolysis oils of the process these can vary between 26 and 41%. The yields of the solid product vary between 55 and 58%, while those of the gaseous product vary between 12 and 17%.

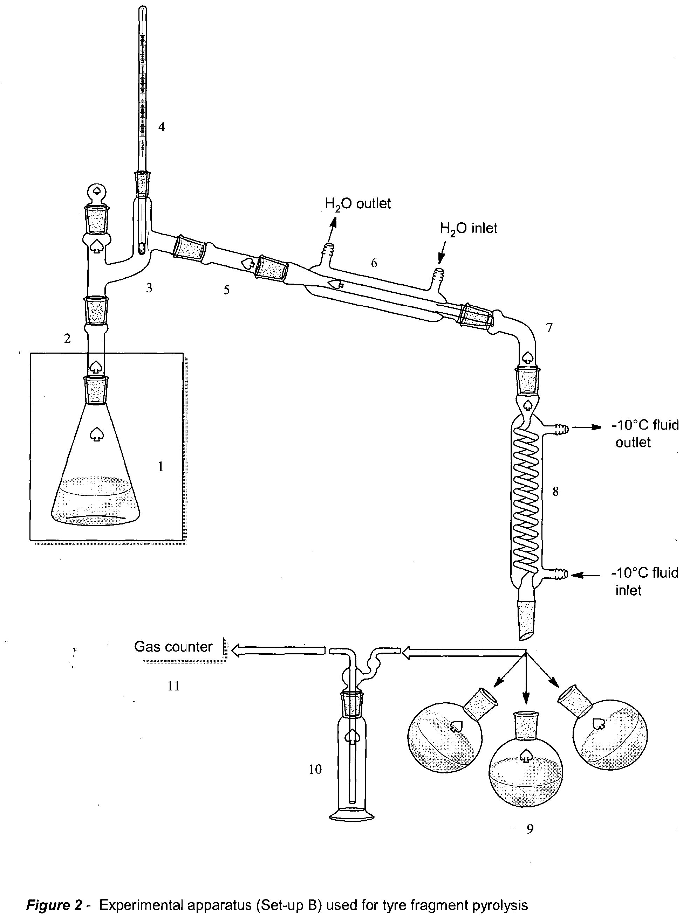

The yield of the pyrolysis process is always 100%. According to the invention, very similar results from the qualitative point of view can be obtained by operating also without the fractionation system of the vapours, but with a special delivery adjustment of the MW power level (Set-up B, Figure 2) and that is, with such a power level as to obtain a $V_{M\%}$ comprised between 0.3 and 2.0 $min^{-1}$ and/or a mean heating rate ($V_{M\,risc}$) comprised between 5 and 20 °C/min, it is possible to obtain pyrolysis oils which contain limonene in a quantity of 2 to 4%, BTX in a quantity comprised between 9 and 14% (percentage area by GC-MS analysis). The high quantity of limonene and single ring aromatic compounds, such as toluene, benzene, styrene, etc., makes pyrolysis oils a possible resource from which to isolate the prevalent compounds. In addition, the quantity of distillable hydrocarbons in the range comprised between 20 to 265 °C is greater than 40% by weight of the pyrolysis oil.

In particular, it was surprisingly observed that it is possible to obtain pyrolysis oils having a sulphur content of <1% by weight and a fraction of distillable hydrocarbons comprised between 20 and 265 °C greater than 50% by weight, even by operating according to the process of the invention in the B set-up, and by adjusting the delivery of the MW to such a power level as to obtain a mean percentage pyrolysis rate ($V_{M\%}$) comprised between 0.30 and 1.30/min and/or a mean heating rate ($V_{M\,risc}$) comprised between 5 and 15 °C/min.

Even more surprisingly, it was observed that it is possible to obtain pyrolysis oils having a sulphur content of <1% by weight and a fraction of distillable hydrocarbons comprised between 20 and 220 °C greater than 60% by weight by operating according to the process of the invention in the B set-up, and by adjusting the delivery of the MW to such a power level as to obtain a mean percentage pyrolysis rate ($V_{M\%}$) comprised between 0.30 and 0.60/min and/or a mean heating rate ($V_{M\,risc}$) less than 6 °C/min.

However, depending on the power delivered by the MW and the final temperature of the process, the ratio between the solid, liquid and gaseous fractions of the formed products vary. Larger quantities of solids are obtained with a lower heating rate and correspondingly larger quantities of gaseous products are obtained with a higher heating rate.

The composition and the characteristics of the gaseous products depend on the rate of delivery of the MW power. By increasing the delivery rate of the power, the more volatile products increase and obviously decrease the liquid components.

The sulphur content of the pyrolysis oils does not exceed 1.0%: these liquid products, therefore, fall into the class of low sulphur content fuel oils (BTZ, limit of the sulphur content 1% by weight), and also the results with respect to the heat power, allow to insert the liquid products in this class of commercial products. The possible use as diesel fuel for motor vehicles of liquid products, however, is limited in the light of the new regulation provisions on the subject of fuel quality (from 1 January 2009 the maximum sulphur content in fuels for motor vehicles is set at 10 mg/kg). In the course of the pyrolysis process, a sulphurated compounds sequestering agent, for example Ca(OH)2 is used, causing a reduction of the sulphur content of the pyrolysis oils.

Use of a fractionation system has as a first effect reduction of the pyrolysis average rate compared to the corresponding tests without fractionation. In particular, experiment 11 corresponds with 8, and experiment 12 corresponds with 1. In both comparisons is observed the increase of yield in the solid product at the expense of the liquid fraction which undergoes a process of cracking for a longer time. In both cases, in pyrolysis 11 and 12, the oil appears transparent and of straw yellow colour in contrast to experiments 1 and 8 where the liquid is turbid and has a dark colour.

A slow pyrolysis process, with an apparatus which has a fractionation system, on average leads to a considerable worsening of the yields in both gases and liquids. The effect is less pronounced by operating under conditions of more vigorous heating.

The pyrolysis process with microwave heating has proved to be an **effective, selective,** and **environmentally friendly** method for the thermal degradation of tyres.

**Effective** because, compared to other processes with electric heating, or with an external power source, the transfer of power to the mass to undergo thermal degradation is immediate. It is not even necessary to use complex systems such as fluidized bed reactors for a rapid transfer of heat. Treatment times are considerably reduced even up to 10% with respect to what is reported in the literature for conventional thermal pyrolysis.

**Selective,** since it allows obtaining pyrolysis oils with some basic features both for its use as a fuel and as a source of material for the petrochemical industry. Specifically, it was possible to obtain pyrolysis oils with a density, viscosity, and variety of substances that make up the mixture with high percentages of the distillable fraction typical of petrol and diesel oils. In addition, a discrete selectivity in the production of certain types of hydrocarbons of commercial interest has been reached: benzene (up to 4%), toluene (up to 6%), xylene (up to 8%), and limonene (up to 8%).

**Environmentally friendly,** for the simple alternative that the process provides for all the collection and dumping, incineration, waste-to-energy and conventional pyrolysis processes. It preserves the energy and chemical content of polymeric materials by not oxidizing, but by depolymerising the macromolecules that constitute the charge by transforming them in a potential substrate for the petrochemical industry. There is no dispersion in the environment either of waste or of hazardous or potentially hazardous burning residues, such as sulphurous compounds and heavy metals.

The present invention will be better understood in the light of the following embodiments.

EXPERIMENTAL PART

The pyrolysis experiments were carried out by means of a microwave laboratory oven manufactured by Bi.Elle s.r.l. Company (via Ho Chi Min, 6, Modena, Italy). The oven consists of a sealed chamber, inside of which there is a turntable, four microwave generators outside the oven (characterised by a total power absorption of 8 KW (4 × 2 KW), that deliver a maximum power level of 6 KW as an electromagnetic field operating at a frequency of 2,450 MHz) which communicate with the interior of the chamber through small windows located at half height of the chamber. The position and construction method of the microwave generators, of the magnetron type, ensure uniformity of the MW field distribution inside of the entire chamber.

At the top of the chamber, the oven has a 40 mm diameter hole for the escape of gases and vapours.

To ensure real-time reading of the temperature inside the chamber, an infrared sensor, and a pyrometer were also installed in the centre of one of the inner walls. The oven is operated by an electronic system which allows adjusting the delivery power of microwaves, even in continuity, by varying the electrical power absorbed by each generator. The system allows the creation of heating programmes, characterised by the temperature steps, monitored by the infrared probe, and with the control of the delivered power and the duration of the step for each value of temperature.

However, it is not possible to set a constant and defined heating rate (°C/min). The end-of-life tyres, used in carrying out the pyrolysis experiments, were thermal tyres from a commercial motor vehicle, *Michelin* brand, *Agilis* model *81 - 195/65 R16C.*

The CHNS elemental analysis only of the compound of the tyre has provided the results reported in *Table 1.*

*Table 1 - CHNS elemental analysis of the Michelin Agilis 81 -195/65 tyre compound*

| R16C | | | |
|---|---|---|---|
| C (%) | H (%) | N (%) | S (%) |
| 88.19 | 7.23 | 0.23 | 1.76 |

Although the size and power level of the oven at our disposition enabled it to carry out the pyrolysis experiments of entire tyres, for reasons of operating simplicity and safety, an experimental design was preferred with which to treat portions of 200 to 350 gr.

A tyre consists of several portions, characterised by relative quantities of reinforcement materials (steel) and different compounds, in relation to its function. In a typical experiment, cross sections of about 200 to 350 gr of the tyre, further fragmented into pieces with sides of about 2 cm, were subjected to pyrolysis: a cross section can be considered a representative sample of an entire tyre since within the sample, all the portions of the tyre (tread, sides and bead) are found in the same proportions with respect to the entire tyre.

In *Figure* 1 is shown a scheme (Set-up of the A type) of the experimental apparatus used for the execution of the pyrolysis experiments. The fragments of tyre were introduced, after drying in an oven at 65 °C for 48 hours, within a 1 dm$^3$ Pyrex glass flask, used as a reaction vessel (1): this latter was housed in the centre of the oven chamber, at a height corresponding to that of the emission windows of the MW field and of the infrared sensor.

The reaction vessel (1) was connected, by means of a Pyrex glass joint (2) to a fractionation system of the vapours (2/a), located outside the MW oven chamber, filled, for example, with 4 mm diameter glass beads with the purpose of fractioning the product in outlet from the furnace. The pyrolysis vapours by passing through the fractionation column were deprived of that component which had a boiling temperature higher than that of the vapours. This system thus allowed fractioning the distillable products by dropping into the reaction vessel the higher boiling compounds that had been dragged from the vapours. The vapours were subsequently sent to a Claisen head (3) with a thermometer (4). A straight Pyrex glass joint (4) connected the Claisen head to a water-cooled straight cooler (6) (at room temperature), in turn connected by a bend fitting (7) to a cooling coil (8) cooled to -10 °C, and with a thermostat. A collection system (9), installed downstream of the last cooler, collected the condensable liquid products. A liquid nitrogen trap (10) was connected to the collection system of the liquid phase allowing condensing the vapours of the substances which possibly, despite being liquid at room temperature, were dragged by the gas stream. Finally, the non-condensable part was collected in a gas counter (11).

Alternatively, the experimental apparatus used for carrying out the pyrolysis experiments without fractionation of the vapours in outlet from the MW oven had a set-up of type B, similar to that of type A, but the vapours passing through the joint (2) in outlet from the oven were sent directly to the Claisen head and subsequently to the condensation system and collection of the vapours.

The pyrolysis experiments were carried out in an inert atmosphere: the operating conditions of the process; the operating variables and any modifications to the system just described will be reported and discussed subsequently.

The degradation process begins on average 30 seconds after the ignition of the microwave generators as a function of the delivered power. The vapours in outlet initially are white, which, with the increase of the flow of material in outlet from the oven are coloured up to yellow-brown. Initially, only a fraction of the vapours condenses before reaching the coolers.

Once completed the pyrolysis experiments, the equipment was disassembled as soon as room temperature was reached, and the products in the condensed phase were taken directly in the vessels in which they were collected (one-neck balls for the liquid products, the 1 dm$^3$ flask for the solid residue, the gas counter for gaseous products). In this way the introduction of artefacts in the subsequent characterisations is minimised (the absorption of atmospheric water from the solid residue and the release of the more volatile components from the liquid product are the most likely alterations).

The liquid products (pyrolysis oils) were centrifuged at 3,000 rpm for highlighting any solid materials in suspension.

Samples of liquid products were transferred into 2 cm$^3$ vials and sent to the determinations of the upper heat power level and elemental composition (CHNS analysis). The liquid products were also characterised by infrared spectroscopy and nuclear magnetic resonance spectroscopy, determinations of the density and composition by GC-MS analysis, always carried out on the centrifuged and homogenised liquid: the operative details of these techniques are given in the corresponding paragraphs.

The solid residues were taken from the reaction vessel (the 1 dm$^3$ Pyrex glass flask), crushed, and homogenised in a mortar until obtaining a powder.

Dust samples were transferred into 2 cm$^3$ vials and used for determining the upper heat power level and the elemental composition (CHNS analysis).

The gas mixtures produced during the pyrolysis process were collected in a gas counter, connected to the inert liquid trap located immediately upstream in the process scheme. The volume of gas was measured by means of a GFW Luzern water counter installed upstream of the sampling section. The sampling of the gaseous mixtures for the subsequent characterisations was carried out directly through the gas counter by means of a 250μL Hamilton Gastight syringe.

Measuring the density of the pyrolysis oils was carried out by measuring the mass of oil contained in a known volume, under standard conditions (25.00 °C, 1atm.). The measurement of viscosity was carried out on the liquid products by means of an Ostwlad viscometer thermostat at 25.00 °C in a silicone oil bath Julabo thermostat, ME-18V model. The upper heating power level (U.H.P.) was determined for the pyrolysis products in the condensed phase, pyrolysis oil, and solid residue. In addition, from the U.H.P. it was calculated the lower heating power level (L.H.P.), by using the results of the elemental analysis carried out on the same samples. The determination of the heat power of the condensed phases was carried out by the ESSE.TI.A. s.r.I. Company, at No. 121/123, viale dell'Arte della Paglia, 50058 Signa (FI), Italy, through a method which consists in measuring the temperature before and after the monitored combustion of a known mass sample in an oxygen calorimeter bomb completely immersed in a calorimeter. The GC-MS analysis of the liquid products, for the identification of the substances constituting the mixtures, were carried out through the GC-MS QP5050A Shimadzu instrument, having a quadruple mass analyser, and equipped with a Supelco Equity 5 capillary column or 100 mt. Petrocol.

All pyrolysis oils were subjected to fractional distillation, with the purpose of identifying fractions with characteristics (boiling point, density, and viscosity) comparable to petroleum products.

The pyrolysis experiments are shown below with unique identifying numbers: the pyrolysis products are indicated by preceding the identifying number of the experiment with letter G for gases, with letter L for liquids, and with letter S for solid residues.

Table 2 shows the conditions of the carried out experiments.

Liquid products L1-L4, L6-L9, and L10-B appear yellow-brown and turbid. However, there is no precipitation of solid even after centrifugation at 3,000 rpm for 20 min. Liquid products L5, L10-A, L11-A, L11-B, and L12 appear straw yellow and are transparent.

Fractions L10-A (14.71%) and L11-A (23.10%) were collected in correspondence with the MW delivery at 25% of the power, while fractions L10-B (24.05%) and L11-B (7.5%) were collected in correspondence with the increase of the MW power.

The pyrolysis oils distil (Table 4) for a percentage comprised between 22 and 82% by weight in the temperature range comprised between 20 and 265 °C.

For example, from the fractional distillation of the L9 oil, shown in Table 5, it is possible to demonstrate that 34.86% of the pyrolysis oil distils in the 20 to 220 °C range, a characteristic range for commercial petrol. This result is definitely interesting, because it demonstrates the potentiality of the tyre pyrolysis oils as a resource for obtaining products of high commercial interest.

The 15 prevalent substances present in pyrolysis oils, as detected by the GC-MS analyses, are shown in Tables 6 and 7.

All gaseous mixtures obtained in the experiments appear colourless, transparent, and with an unpleasant smell. The identification and quantification of the percentage composition of the hydrocarbon mixture was carried out by GC-MS. In Table 8 are shown, for the identified substances, the values in the percentage area with respect to the total peak area of the gas chromatogram.

Table 2 - Pyrolysis experiments

| Exp# | Set-up | Delivered power (%) | Tmax (°C) | Duration (min) | Mass subjected to pyrolysis (g) | $V_{M\%}$ (/min) | $V_{Mrisc}$ (°C/min) | Solid (wt%) | Liquid (wt%) | Gas (wt%) |
|---|---|---|---|---|---|---|---|---|---|---|
| 1 | B | 100 | 599 | 14 | 208.8 | 3.56 | 41 | 50.1 | 28.7 | 21.2 |

(continued)

| Exp# | Set-up | Delivered power (%) | Tmax (°C) | Duration (min) | Mass subjected to pyrolysis (g) | $V_{M\%}$ (/min) | $V_{Mrisc}$ (°C/min) | Solid (wt%) | Liquid (wt%) | Gas (wt%) |
|---|---|---|---|---|---|---|---|---|---|---|
| 2 | B | 80 | 514 | 15 | 212.8 | 3.45 | 33 | 48.2 | 37.6 | 14.2 |
| 3 | B | 60 | 451 | 20 | 205.6 | 2.37 | 22 | 52.7 | 133.0 | 14.3 |
| 4 | B | 50 | 495 | 39 | 233.3 | 1.27 | 12 | 50.4 | 39.2 | 10.3 |
| 5 | B | 25 | 495 | 100 | 252.1 | 0.31 | 5 | 69.4 | 20.1 | 10.4 |
| 6 | B | from 60 to 100 in about 2.5 min. | 599 | 17.6 | 228.4 | 2.82 | 33 | 50.3 | 37.3 | 12.4 |
| 7 | B | from 60 to 100 in about 5 min | 599 | 21 | 200.8 | 2.36 | 28 | 50.4 | 17.6 | 32.0 |
| 8 | B | 25x44 min; 100x15 min | 599 | 59 | 253.1 | 0.87 | 10 | 48.4 | 38.3 | 13.3 |
| 9 | B | from 60 to 100 in about 32 min | 599 | 62 | 342.4 | 0.80 | 9 | 50.5 | 39.9 | 9.6 |
| 10 | B | 25x18 min; 50x45 min; 75x13 min | 599 | 76 | 250.0 | 0.66 | 8 | 49.7 | 40.7 | 9.6 |
| 10* | B | 25x18 min; 50x45 min; 75x13 min | 599 | 76 | 250.0 | 0.66 | 8 | 49.7 | 40.7 | 9.6 |
| 11 | A | 30x55 min; 50x43 min; 100x12 min | 599 | 110 | 306.1 | 0.41 | 5 | 55.1 | 32.2 | 12.7 |
| 12 | A | 100 | 599 | 39 | 301.8 | 1.08 | 15 | 57.8 | 26.1 | 16.1 |

Set-up B: without a fractionation system of the vapours in outlet from the oven; Set-up A: with a fractionation system of the vapours in outlet from the oven. *) Experiment carried out in the presence of a sulphurated compounds sequestering agent, [(Ca(OH)$_2$ 10 % by weight on the charge]

Table 3 - Characteristics of the pyrolysis oils

| Liquid product | Density at 25°C (g/cm$^3$) | PCS (MJ/Kg) | PCI (MJ/Kg) | Viscosity (cps) | C (wt. %) | H (wt. %) | N (wt. %) | S (wt. %) | H/C Relation |
|---|---|---|---|---|---|---|---|---|---|
| L1 | 0.900 | 47±5 | 45±4 | 2.58 | 87.72 | 11.31 | 1.23 | 0.7 | 0.129 |
| L2 | 0.889 | 48±5 | 46±5 | 2.44 | 85.78 | 11.01 | 1.29 | 1.0 | 0.153 |
| L3 | 0.879 | 49±5 | 47±5 | 1.93 | 87.44 | 10.44 | 2.43 | 1.0 | 0.142 |
| L4 | 0.874 | 44±4 | 42±4 | 1.73 | 76.87 | 10.12 | 1.66 | 0.9 | 0.132 |
| L5 | 0.816 | 43±4 | 40±4 | 0.73 | 87.35 | 11.83 | 1.05 | 0.8 | 0.135 |
| L6 | 0.901 | 48±5 | 47±5 | 3.19 | 78.42 | 7.54 | ND | 1.0 | 0.114 |
| L7 | 0.905 | 48±4 | 47±4 | 3.39 | 88.47 | 11.02 | 0.54 | 0.8 | 0.148 |

(continued)

| Liquid product | Density at 25°C (g/cm$^3$) | PCS (MJ/Kg) | PCI (MJ/Kg) | Viscosity (cps) | C (wt. %) | H (wt. %) | N (wt. %) | S (wt. %) | H/C Relation |
|---|---|---|---|---|---|---|---|---|---|
| L8 | 0.881 | 43±4 | 41±4 | 1.72 | 81.75 | 9.88 | 3.05 | 0.9 | 0.121 |
| L9 | 0.899 | 48±5 | 46±5 | ND | 86.1 | 12.12 | 0.88 | 1.2 | 0.167 |
| L10*-A | 0.813 | 43±4 | 41±4 | 0.70 | 85.21 | 12.09 | 1.36 | 0.3 | 0.142 |
| L10*-B | 0.912 | 43±4 | 41±4 | 2.62 | 89.35 | 10.51 | 1.77 | 0.4 | 0.118 |
| L11-A | 0.819 | 45±4 | 43±4 | 0.63 | 65.01 | 8.84 | 1.46 | 0.6 | 0.136 |
| L11-B | 0.921 | 43±4 | 41±4 | 1.67 | 55.44 | 10.59 | 3.54 | 1.0 | 0.191 |
| L12 | 0.816 | 43±4 | 42±4 | 0.57 | 88.21 | 11.40 | 1.60 | 0.9 | 0.129 |

Table 4 - Fractioned distillation, total distilled and residual not distillable.

| Liquid product | Duration (min) | $V_M$% (/min) | Residual not distilled (%) | Distilled (%) | Maximum Temperature (°C) |
|---|---|---|---|---|---|
| L1 | 13 | 3.84 | 70.82 | 22.93 | 205 |
| L4 | 39 | 1.27 | 41.57 | 52.80 | 240 |
| L5 | 100 | 0.31 | 13.93 | 74.61 | 200 |
| L8 | 59 | 0.88 | 37.22 | 52.53 | 230 |
| L9 | 62 | 0.80 | 54.10 | 45.90 | 265 |
| L10*-A | 76 | 0.66 | 18.62 | 65.44 | 255 |
| L10*-B | 76 | 0.66 | 50.51 | 41.86 | 240 |
| L11-A | 110 | 0.41 | 4.39 | 82.72 | 195 |
| L12 | 39 | 1.08 | 4.14 | 71.85 | 159 |

Table 5 - Fractioned distillation of the L9 pyrolysis oil: percentage of distilled product depending on the boiling temperature.

| Temperature (°C) | Percentage of distilled product (%) |
|---|---|
| 20 | 0.00 |
| 40 | 0.40 |
| 65 | 4.35 |
| 80 | 5.17 |
| 130 | 9.48 |
| 145 | 12.52 |
| 165 | 18.91 |
| 190 | 26.51 |
| 220 | 34.86 |
| 265 | 45.90 |

Table 6 - Le 15 majority substances detected in the GC-MS analysis of the L1-L12 pyrolysis oils

| N | Substance | L1 | L4 | L5 | L8 | L10*-A | L10*-B | L11-A | L12 |
|---|---|---|---|---|---|---|---|---|---|
| 1 | 2-butene-trans | 1.63 | 1.49 | 1.05 | 1.02 | 1.21 | 0.81 | 0.95 | 0.87 |
| 2 | 1,3-pentadiene | 3.18 | 1.63 | 1.49 | 1.12 | 1.70 | 0.31 | 1.49 | 2.26 |
| 3 | 3-metil-1-esene | 2.09 | 1.57 | 1.40 | 1.12 | 1.63 | 0.64 | 1.47 | 1.78 |
| 4 | Benzene | 3.91 | 1.71 | 2.78 | 1.56 | 2.26 | 1.66 | 0.88 | 2.70 |
| 5 | Toluene | 4.55 | 2.87 | 3.52 | 2.49 | 3.11 | 2.51 | 2.85 | 4.30 |
| 6 | 1, 3-dimethylbenzene | 2.15 | 2.13 | 2.71 | 1.81 | 2.66 | 1.61 | 1.95 | 2.10 |
| 7 | 1,4-dimethylbenzene | 3.78 | 2.34 | 3.50 | 2.13 | 3.37 | 1.25 | 2.86 | 3.71 |
| 8 | Styrene | 3.06 | 1.39 | 1.45 | 1.10 | 1.85 | 0.76 | 1.20 | 2.20 |
| 9 | 1,2-dimethylbenzene | 0.99 | 0.75 | 1.27 | 0.69 | 1.05 | 0.57 | 1.13 | 1.38 |
| 10 | 1,2,3-trimethylbenzene | 1.26 | 1.16 | 2.08 | 1.24 | 1.97 | 1.04 | 1.38 | 1.44 |
| 11 | 1, 2, 4- trimethylbenzene | 0.61 | 0.76 | 1.05 | 0.81 | 1.06 | 0.73 | 1.11 | 0.95 |
| 12 | 1,3,5-trimethylbenzene | 1.36 | 1.11 | 1.44 | 1.21 | 1.51 | 0.76 | 1.93 | 2.17 |
| 13 | 1-etil-3-methylbenzene | 0.99 | 1.01 | 1.27 | 1.07 | 1.41 | 0.78 | 1.30 | 1.39 |
| 14 | 1, 2, 4, 5-tetramethylbenzene | 0.76 | 1.40 | 2.10 | 1.82 | 2.41 | 1.19 | 2.49 | 1.16 |
| 15 | Limonene | 3.72 | 3.43 | 2.49 | 2.23 | 3.49 | 0.82 | 4.23 | 7.13 |

Table 7 - Le 15 majority substances detected in the GC-MS analysis of the L6, L7, and L9 pyrolysis oils

| SUBSTANCE | L6 | L7 | L9 |
|---|---|---|---|
| | | | |
| Isobutene | 3.00 | 2.34 | 6.42 |
| 2-pentene | | | 1.43 |
| Isoprene | 4.98 | 4.09 | 2.33 |
| 2-methyl-1-butene | | | 2.20 |
| 1,2,5-esatriene | 1.00 | 0.94 | |
| 1,4-esadiene- | 1.27 | 1.16 | 1.74 |
| Benzene | 2.53 | 2.50 | 2.49 |
| 4-Metil-1,4-esadiene | 0.98 | | 1.09 |
| 1-Methyl-3-cicloesen-1-olo | 1.08 | 1.06 | 1.29 |
| 1,5-Dimethylciclopentene | | | 1.25 |
| Toluene | 4.78 | 4.83 | 6.96 |
| 4-Etenilcicloesene | 1.01 | 1.04 | |
| Ethylbenzene | 2.66 | 2.47 | 4.79 |
| Xylene | 2.62 | 2.67 | 2.33 |
| Styrene | 2.69 | 2.76 | 2.31 |
| Methyl-ethylbenzene | | 0.90 | |
| Alfa-methylstyrene | 0.83 | | |
| Ethenyl-cycloesane | | 1.01 | |
| Methyl-isopropylbenzene | 1.21 | 1.61 | 2.22 |

(continued)

| SUBSTANCE | L6 | L7 | L9 |
|---|---|---|---|
| Limonene | 3.32 | 3.85 | 2.72 |
| **TOTAL** | 33.96 | 33.24 | 41.56 |

Table 8 - Substances identified in the G1 - G5, G8 and G10 gaseous mixes.

| Substance | G1 | G2 | G3 | G4 | G5 | G8 | G10* |
|---|---|---|---|---|---|---|---|
| C1+C2 | 46.54 | 64.70 | 64.12 | 76.79 | 70.29 | 29.22 | 27.39 |
| Propylene | 9.27 | 8.05 | 4.07 | 3.70 | 3.27 | 12.38 | 12.10 |
| 1-Butane | 22.06 | 15.21 | 7.38 | 10.10 | 14.56 | 35.60 | 39.44 |
| 2-Butane-trans | 1.99 | - | 0.90 | 0.94 | 1.19 | - | - |
| 2-Butane-cis | 1.24 | 0.27 | 0.56 | 0.56 | 0.61 | 0.59 | - |
| 2-Methyl-1-butane | - | 0.79 | 0.63 | - | 0.94 | 2.07 | 1.00 |
| n-Pentane | 1.20 | | | 0.75 | - | - | 0.79 |
| Isoprene | 10.23 | 5.13 | 19.84 | 3.60 | 5.18 | 10.88 | - |
| 2-Esane | - | 2.05 | | - | - | 0.04 | 0.02 |
| TOTAL | 92.53 | 96.20 | 97.50 | 96.44 | 96.05 | 90.78 | 80.75 |

The solid, residue in the reaction vessel at the end of the experiments, appeared as a friable material, black in colour, of the same initial sizes of the tyre fragments. The material after crushing and homogenisation appeared as a black powder mixed with metal wires removable with a simple magnet, having the composition shown in table 9.

Table 9 - Elemental analysis of the solid products

| Solid product | C (wt.%) | H (wt.%) | N (wt.%) | S (wt.%) | H/C Relation (%) |
|---|---|---|---|---|---|
| S1 | 88.33 | 0.35 | 0.15 | 2.3 | 0.40 |
| S2 | 87.99 | 0.58 | 0.00 | 1.8 | 0.08 |
| S3 | 83.89 | 0.73 | 0.00 | 1.8 | 0.10 |
| S4 | 82.31 | 0.83 | 0.48 | 2.0 | 1.01 |
| S5 | 86.71 | 3.21 | 0.33 | 1.3 | 3.70 |
| S6 | 89.42 | 0.40 | 0.43 | 2.3 | 0.44 |
| S7 | 89.03 | 0.42 | 0.09 | 1.9 | 0.47 |
| S8 | 84.43 | 0.74 | 0.21 | 2.0 | 0.88 |
| S9 | 88.86 | 0.82 | 0.22 | 1.7 | 0.92 |
| S10 | 98.36 | 0.71 | 0.40 | 1.5 | 0.79 |
| S10* | 78.36 | 0.56 | 0.31 | 1.2 | 0.79 |
| S11 | 85.12 | 0.35 | 0.68 | 2.8 | 0.41 |
| S12 | 85.39 | 0.44 | 0.54 | 2.1 | 0.77 |
| S10*: test carried out in the presence of a sulphurated compound sequestering agent. | | | | | |

## Claims

**1.** Process comprising pyrolysing a material consisting of end-of-life tyres (PFU) by means of irradiation with microwaves (MW), in order to obtain pyrolysis oils having a sulphur content of <1% by weight and a fraction of distillable hydrocarbons in amount greater than 40% by weight, having a boiling point b.p. comprised between 20 and 265 °C said process **characterised in that**:
the delivery of the MW is adjusted to such a power level as to obtain a mean percentage pyrolysis rate ($V_{M\%}$) of between 0.30 and 2.00 %/min and/or a mean heating rate ($V_{M\ risc}$) less than 20 °C/min.

**2.** Process according to claim 1 to obtain pyrolysis oils having a sulphur content of <1% by weight and a fraction of distillable hydrocarbons in amount greater than 50% by weight, having a b.p. comprised between 20 and 265 °C wherein the delivery of the MW is adjusted to such a power level as to obtain a mean percentage pyrolysis rate ($V_{M\%}$) comprised between 0.30 and 1.30 %/min and/or a mean heating rate ($V_{M\ risc}$) comprised between 5 and 15 °C/min.

**3.** Process according to claim 1 to obtain pyrolysis oils having a sulphur content of <1% by weight and a fraction of distillable hydrocarbons in amount greater than 60% by weight, having a b.p. comprised between 20 and 220 °C wherein the delivery of the MW is adjusted to such a power level as to obtain a mean percentage pyrolysis rate ($V_{M\%}$) less than 0.60 %/min and/or a mean heating rate ($V_{M\ risc}$) less than 6 °C/min.

**4.** Process according to claims 2 or 3 wherein the power is delivered in an increasing manner.

**5.** Process according to any one of the preceding claims wherein to reduce the sulphur content in the pyrolysis oils, during the process a sulphurated compounds sequestering agent, for example Ca(OH)2 is used.

**6.** Process according to any one of the preceding claims wherein, one or more generators operating at a frequency of 2.45 GHz are used for the delivery of the MW.

## Patentansprüche

**1.** Verfahren, aufweisend das Pyrolysieren eines Materials, das aus Altreifen (PFU) besteht, mittels Bestrahlung mit Mikrowellen (MW), um Pyrolyseöle mit einem Schwefelgehalt von <1 Gew.-% und einem Anteil an destillierbaren Kohlenwasserstoffen in einer Menge von mehr als 40 Gew.-% mit einem Siedepunkt (b.p.) zwischen 20 und 265 °C zu erhalten, wobei das Verfahren **dadurch gekennzeichnet ist,**
**dass** die Zuführung der Mikrowellen (MW) auf ein solches Leistungsniveau eingestellt ist, dass eine mittlere prozentuale Pyrolysequote ($V_{M\%}$) zwischen 0,30 und 2,00 %/min und/oder eine mittlere Aufheizrate ($V_{M\ risc}$) unter 20 °C/min erreicht wird.

**2.** Verfahren nach Anspruch 1 zum Erhalten von Pyrolyseölen mit einem Schwefelgehalt von <1 Gew.-% und einem Anteil an destillierbaren Kohlenwasserstoffen in einer Menge von mehr als 50 Gew.-% mit einem Siedepunkt (b.p.) zwischen 20 und 265 °C, wobei die Zuführung der Mikrowellen (MW) auf ein solches Leistungsniveau eingestellt wird, dass eine mittlere prozentuale Pyrolysequote ($V_{M\%}$) zwischen 0,30 und 1,30 %/min und/oder eine mittlere Aufheizrate ($V_{M\ risc}$) zwischen 5 und 15 °C/min erhalten wird.

**3.** Verfahren nach Anspruch 1 zum Erhalten von Pyrolyseölen mit einem Schwefelgehalt von <1 Gew.-% und einem Anteil an destillierbaren Kohlenwasserstoffen in einer Menge von mehr als 60 Gew.-% mit einem Siedepunkt (b.p.) zwischen 20 und 220 °C, wobei die Zuführung der Mikrowellen MW auf ein solches Leistungsniveau eingestellt wird, dass eine mittlere prozentuale Pyrolysequote ($V_{M\%}$) von weniger als 0,60 %/min und/oder eine mittlere Aufheizrate ($V_{M\ risc}$) von weniger als 6 °C/min erhalten wird.

**4.** Verfahren nach Anspruch 2 oder 3, worin die Leistung in zunehmender Weise zugeführt wird.

**5.** Verfahren nach einem der vorstehenden Ansprüche, wobei während des Verfahrens zur Reduzierung des Schwefelgehalts in den Pyrolyseölen ein Sequestriermittel für geschwefelte Verbindungen, beispielsweise Ca(OH)2, verwendet wird.

**6.** Verfahren nach einem der vorhergehenden Ansprüche, worin ein oder mehrere Generatoren, die mit einer Frequenz von 2,45 GHz arbeiten, für die Zuführung der Mikrowellen (MW) verwendet werden.

**Revendications**

1. Procédé comprenant la pyrolyse d'un matériau constitué de pneus en fin de vie (PFU) au moyen d'une irradiation par des micro-ondes (MW), pour obtenir des huiles de pyrolyse ayant une teneur en soufre de < 1 % en poids et une fraction d'hydrocarbures distillables en une quantité supérieure à 40 % en poids, ayant un point d'ébullition b.p. compris entre 20 et 265°C ledit procédé **caractérisé en ce que** :
   la fourniture des MW est ajustée à un niveau de puissance tel qu'il est possible d'obtenir un pourcentage moyen de vitesse de pyrolyse ($V_{M\%}$) compris entre 0,30 et 2,00 %/min et/ou une vitesse de chauffage moyenne ($V_{M\ risc}$) inférieure à 20 °C/min.

2. Procédé selon la revendication 1 d'obtention d'huiles de pyrolyse ayant une teneur en soufre de < 1 % en poids et une fraction d'hydrocarbures distillables en une quantité supérieure à 50 % en poids, ayant un b.p. compris entre 20 et 265°C dans lequel la fourniture des MW est ajustée à un niveau de puissance tel qu'il est possible d'obtenir un pourcentage moyen de vitesse de pyrolyse ($V_{M\%}$) compris entre 0,30 et 1,30 %/min et/ou une vitesse de chauffage moyenne ($V_{M\ risc}$) comprise entre 5 et 15 °C/min.

3. Procédé selon la revendication 1 d'obtention d'huiles de pyrolyse ayant une teneur en soufre de < 1 % en poids et une fraction d'hydrocarbures distillables en une quantité supérieure à 60 % en poids, ayant un b.p. compris entre 20 et 220°C dans lequel la fourniture de la MW est ajustée à un niveau de puissance tel qu'il est possible d'obtenir un pourcentage moyen de vitesse de pyrolyse ($V_{M\%}$) inférieur à 0,60 %/min et/ou une vitesse de chauffage moyenne ($M_{V\ risc}$) inférieure à 6 °C/min.

4. Procédé selon les revendications 2 ou 3 dans lequel la puissance est administrée d'une manière croissante.

5. Procédé selon l'une quelconque des revendications précédentes dans lequel pour réduire la teneur en soufre dans les huiles de pyrolyse, durant le procédé un agent de séquestration de composés sulfurés, par exemple le $Ca(OH)_2$, est utilisé.

6. Procédé selon l'une quelconque des revendications précédentes dans lequel, un ou plusieurs générateurs fonctionnant à une fréquence de 2,45 GHz sont utilisés pour la fourniture de MW.

**H₂O outlet**

**H₂O inlet**

→ -10°C fluid outlet

← -10°C fluid inlet

Gas counter

*Figure 1* - Experimental apparatus with fractionation (Set-up A) used for tyre fragment pyrolysis

*Figure 2* - Experimental apparatus (Set-up B) used for tyre fragment pyrolysis

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070131591 A